# FASCICULE DE BREVET EUROPEEN

(11) **EP 0 756 746 B1**
(45) Date de publication et mention de la délivrance du brevet: **12.07.2000**
(21) Numéro de dépôt: 96904145.8
(22) Date de dépôt: 15.02.1996
(51) Int. Cl.: G11C 16/06

(54) **PROCEDE DE MISE A JOUR SECURISEE DE MEMOIRE EEPROM**
SICHERES AKTUALISIERUNGSVERFAHREN FÜR EEPROM
METHOD FOR THE SECURE UPDATING OF AN EEPROM MEMORY

(30) Priorité: 16.02.1995 FR 9501791
(43) Date de publication de la demande: 05.02.1997
(73) Titulaire: GEMPLUS, 13420 Gemenos (FR)
(72) Inventeur: LAGET, Anne, F-13400 Aubagne (FR); VALADE, Jean-Marie, F-13600 La Ciotat (FR)
(74) Mandataire: Schmit, Christian Norbert Marie
(86) Numéro de dépôt international: FR9600247
(87) Numéro de publication internationale: WO9625743

(56) Documents cités:
- EP-A- 0 630 027
- WO-A-92/04716
- WO-A-94/24673
- FR-A- 2 665 791
- FR-A- 2 687 811

## Description

L'invention concerne les mémoires non-volatiles, telles que les mémoires EEPROM et les circuits associés permettant de mettre à jour d'une manière sûre les données contenues dans ces mémoires.

La mise à jour d'une donnée consiste à remplacer, à une adresse déterminée de la mémoire, une ancienne donnée par une nouvelle donnée. Cette opération dure un certain temps. Il peut arriver accidentellement que la tension d'alimentation de la mémoire soit coupée pendant cette mise à jour. Si c'est le cas, on perd à la fois l'ancienne donnée et la nouvelle.

Lorsque les données à enregistrer sont des données "sensibles", c'est-à-dire des données dont la conservation est critique dans l'application considérée, cette situation est inacceptable.

Un exemple d'application est le suivant : la mémoire est celle d'une carte à puce; les données représentent une valeur économique enregistrée dans la carte; ces données sont sensibles; elles sont remises à jour lorsque la carte est utilisée dans un lecteur de cartes pour obtenir des produits ou des services. En cas d'arrachement intempestif de la carte hors du lecteur en cours d'opération de remise à jour, les données représentant la valeur résiduelle de la carte risquent d'être perdues, au détriment du possesseur de la carte ou du prestataire de produits ou de services.

Pour éviter cette situation, on a déjà proposé des mécanismes de mise à jour de mémoire dans lesquels toute mise à jour débute par une opération de sauvegarde de l'ancienne donnée dans un autre emplacement de mémoire non volatile avant de mettre à jour la nouvelle donnée à l'adresse voulue. Si l'opération de mise à jour se déroule mal, on conserve au moins l'ancienne valeur de la donnée.

Une difficulté de réalisation de ces systèmes réside dans la gestion des espaces de mémoire qui doivent être utilisés pour sauvegarder l'ancienne donnée. Un pointeur non volatil (registre de mémoire EEPROM) est en général utilisé pour indiquer l'emplacement de la zone de mémoire contenant l'information sauvegardée.

La demande internationale publiée sous le n° WO 92/04716 du même demandeur expose un procédé de mise à jour d'une mémoire dans une carte à puce sans utiliser une mémoire de sauvegarde.

On pourra par ailleurs se reporter à l'état de la technique constitué par le brevet français publié sous le numéro: 2 665 791 dans lequel on fait également appel à un pointeur d'adresse pour indiquer l'adresse de la zone contenant la valeur courante de l'information.

Le brevet français publié sous le n° 2 665 791 illustre la difficulté de gérer l'espace mémoire pour la sauvegarde. La solution proposée dans ce brevet consiste à utiliser, pour chaque information à mémoriser, N zones mémoires permettant la sauvegarde de N valeurs successives de cette information. Une zone supplémentaire (pointeur) est utilisée pour repérer la valeur courante de l'information.

A chaque mise à jour, on modifie la valeur du pointeur. Dans le cas où seules la valeur ancienne et la valeur courante sont conservées, deux zones sont réservées pour les mémoriser et le pointeur passe alternativement de l'état 1 à l'état 0 pour indiquer dans laquelle de ces deux zones se trouve la valeur courante.

Le procédé de mise à jour proposé ne donne pas entièrement satisfaction et présente des risques de mauvais fonctionnement. Ces risques sont dus notamment à un usage intensif des cellules de mémoire constituant le pointeur (ou indicateurs dans le cas des autres procédés cités). Ces cellules sont sujettes à un vieillissement et à une perte de fiabilité lorsque les effacements et programmations sont trop fréquents.

La présente invention cherche à éliminer le plus possible les risques de mauvais fonctionnement et par conséquent les risques de pertes de données sensibles lors de la mise à jour de ces données.

Pour cela, on propose selon l'invention un procédé de mise à jour ne comportant pas de pointeur physique et conçu de sorte que les opérations de mise à jour fatiguent le moins possible les différentes mémoires utilisées pour assurer la sauvegarde de données sensibles.

On propose donc un procédé de mise à jour d'une donnée sensible dans une mémoire non-volatile principale, comportant les opérations consistant à :
- sauvegarder dans une mémoire de sauvegarde non volatile l'ancienne valeur de la donnée;
- activer un indicateur de sauvegarde pour indiquer qu'une donnée vient d'être sauvegardée et qu'une modification de donnée sensible est en cours;
- modifier la donnée sensible dans la mémoire principale;
- et désactiver l'indicateur si la modification de la donnée s'est déroulée correctement,
ce procédé étant caractérisé en ce que :
- la mémoire de sauvegarde est divisée en zones de mémoire;
- une zone de mémoire respective différente de la précédente est utilisée à chaque nouvelle mise à jour pour sauvegarder l'ancienne donnée dans la mémoire de sauvegarde;
- au moins un champ des zones de la mémoire de sauvegarde, appelé champ descripteur, est utilisé pour repérer la zone de mémoire de sauvegarde qui doit être utilisée au cours d'une opération de mise à jour;

Avantageusement, l'opération de mise à jour commence par la recherche, dans la mémoire de sauvegarde, de la première zone de mémoire comportant un champ descripteur ayant une valeur caractéristique (en pratique ce sera un champ complètement effacé); et l'opération de sauvegarde de l'ancienne donnée comporte la modification du champ descripteur de la zone de sauvegarde de l'ancienne donnée et comporte également l'inscription de ladite valeur caractéristique dans le champ descripteur de la première zone de mémoire suivant immédiatement cette zone.

La mise à jour d'une donnée sensible comporte en pratique la lecture systématique des champs descripteurs de la mémoire de sauvegarde jusqu'à trouver une première zone dont le champ descripteur est effacé; la sauvegarde dans cette zone de l'ancienne valeur de la donnée sensible à mettre à jour; l'effacement d'une deuxième zone suivant la première zone, en vue de la prochaine sauvegarde; l'activation d'un indicateur pour la première zone, indiquant que des données ont été sauvegardées dans cette zone; la modification de la donnée sensible dans la mémoire principale; la désactivation de l'indicateur si la modification s'est déroulée normalement.

Ce n'est pas toujours la même zone de mémoire qui est utilisée pour la sauvegarde des données sensibles. Les différentes zones disponibles sont utilisées successivement. Si toutes les zones ont été utilisées, on peut envisager de recommencer par la première, c'est-à-dire que lorsque la dernière zone est utilisée, on procède à l'effacement de la première. Il n'y a pas de pointeur non volatil pour indiquer quelle zone doit être utilisée à un moment donné, mais c'est l'observation du contenu des zones qui détermine la zone à utiliser. Par conséquent, non seulement on évite complètement les risques de fatigue et donc d'erreurs dûs à l'écriture fréquente dans un pointeur, mais on minimise la fatigue des zones de sauvegarde en écrivant successivement dans N zones différentes et en recommençant à écrire dans une zone seulement lorsque toutes les zones ont été utilisées.

L'indicateur de sauvegarde fait de préférence partie de la zone de sauvegarde dans laquelle une ancienne valeur de donnée sensible est sauvegardée.

Lorsque la mémoire est remise sous tension, un programme systématique de vérification est effectué : on recherche la présence d'un indicateur activé dans la mémoire de sauvegarde, et on réécrit dans la mémoire principale l'ancienne donnée sauvegardée dans la zone désignée par cet indicateur activé.

Dans certains cas, on cherche à mettre à jour un ensemble cohérent de plusieurs données sensibles qui ne doivent pas être mises à jour séparément sous peine de perdre la cohérence du contexte de l'application. Cependant, la mémoire ne permet de faire des effacements et écritures que pour une donnée à la fois.

L'invention est alors encore applicable dans ce cas de la manière suivante : chaque donnée sensible est sauvegardée dans une zone respective, avec à chaque fois effacement du champ descripteur de la zone suivante et activation de l'indicateur de sauvegarde de la zone contenant des données sauvegardées; puis, modification de la donnée sensible correspondante; enfin, après que ces opérations aient été faites pour la dernière donnée, sauvegardée dans une zone de rang R, la zone suivante de rang R+1 ayant été effacée, on active un indicateur supplémentaire qui est l'indicateur de la zone de rang R+1; enfin, on désactive successivement les indicateurs activés précédemment, en commençant par le dernier, en remontant vers les précédents, et en terminant par l'indicateur supplémentaire.

Ceci permet de garder l'ensemble de l'ancien contexte tant que toutes les nouvelles données n'ont pas été modifiées, et surtout tant que les indicateurs de sauvegarde n'ont pas tous été remis à zéro.

Dans une réalisation particulière de l'invention, on pourra associer à la mémoire de sauvegarde un registre de validité dont le contenu définira si les différentes zones de sauvegarde sont en état de fonctionner. Lorsque des zones deviennent non fiables (ce que l'on détecte à chaque programmation en comparant le contenu qu'on veut programmer et le contenu qu'on a réellement programmé), on l'indique dans le registre de validité. Dans ce cas, lorsqu'on prépare la zone de sauvegarde suivante (effacement de son champ descripteur) en vue d'une future opération de mise à jour, la zone suivante considérée est la zone valide suivante, c'est-à-dire qu'on ne considère pas comme zone suivante une zone dont le registre de validité indique qu'elle ne doit pas être utilisée.

L'invention est particulièrement applicable aux cartes à puces comportant un microprocesseur et une mémoire non volatile principale (EEPROM en général). La carte comporte alors un programme de système définissant le déroulement des opérations de mise à jour de données sensibles conformément au procédé défini ci-dessus, et un programme de restauration de données à la remise sous tension, ce programme comportant la vérification systématique de l'état des indicateurs de sauvegarde, la réinscription de données sauvegardées en fonction de l'état des indicateurs, et la désactivation des indicateurs activés.

D'autres caractéristiques et avantages de l'invention apparaîtront à la lecture de la description détaillée qui suit et qui est faite en référence aux dessins annexés dans lesquels :
- la figure 1 représente un circuit de carte à mémoire à microprocesseur dans lequel l'invention peut être mise en oeuvre;
- la figure 2 représente l'organisation de la mémoire servant à la sauvegarde des données sensibles avant mise à jour;
- la figure 3 représente un organigramme du procédé de mise à jour selon l'invention, dans une première réalisation;
- la figure 4 représente un organigramme dans une autre réalisation permettant la mise à jour cohérente d'un groupe de données.

L'invention étant principalement applicable aux cartes à puces, c'est dans ce contexte qu'elle va être décrite. De plus, l'invention sera mise en oeuvre de préférence dans une carte à microprocesseur, comprenant non seulement une mémoire non-volatile pour stocker des données variables, mais aussi un microprocesseur pour gérer les échanges de données entre l'intérieur et l'extérieur de la carte. On comprendra cependant que les tâches qui vont être décrites ci-après pourraient être exécutées dans une carte sans microprocesseur, pourvu qu'un automate câblé approprié soit prévu dans la carte pour exécuter ces tâches.

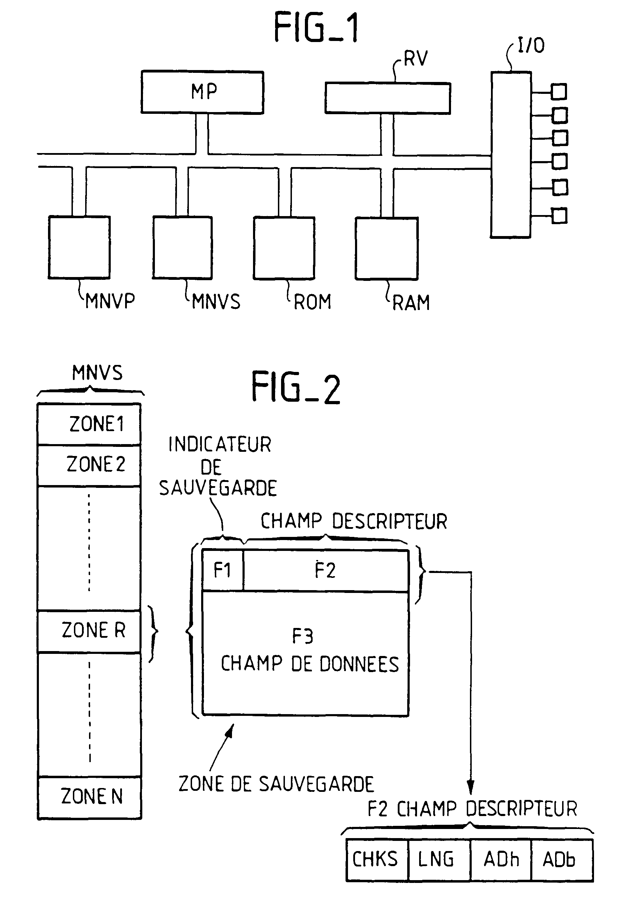

La figure 1 représente une carte à puce à microprocesseur. Le microprocesseur MP est relié par un bus B aux différentes mémoires de la carte et aux ports d'entrée/sortie de la carte. Un port I/O est représenté sur la figure 1.

Parmi les mémoires il y aura en général :
- une mémoire non volatile principale MNVP, programmable et effaçable électriquement, pour l'enregistrement de données utiles dans l'application de la carte à puce; ces données sont modifiées au cours des utilisations successives de la carte, et certaines des données sont des données sensibles qui ne doivent pas être perdues lors d'une interruption intempestive en cours de mise à jour de ces données;
- une mémoire volatile de travail RAM, comme il y en a dans tous les systèmes à microprocesseurs, pour stocker les données intermédiaires nécessaires au cours d'une utilisation de la carte;
- une mémoire morte ROM, contenant des programmes de système permettant le fonctionnement de la carte, programmes qui ne varient pas d'une utilisation à une autre de la carte;
- une mémoire non volatile de sauvegarde MNVS, programmable et effaçable électriquement, nécessaire pour conserver l'ancienne valeur d'une donnée pendant la mise à jour de cette donnée dans la mémoire principale.

Cette dernière mémoire est représentée, pour simplifier, comme une mémoire distincte de la mémoire principale MNVP. On comprendra cependant qu'elle peut être constituée physiquement par une portion, réservée à cet effet, de la mémoire principale. Dans ce cas, un certain nombre d'adresses seront réservées à la mémoire de sauvegarde MNVS. La seule contrainte pratique est que ces adresses doivent se suivre de manière continue, afin que le contenu de la mémoire MNVS puisse être facilement exploré séquentiellement dans un ordre invariable.

On a encore représenté sur la figure 1 un registre non volatil facultatif RV appelé ci-après registre de validité dont on expliquera plus loin l'intérêt. Il peut aussi faire partie de la mémoire MNVP ou de la mémoire MNVS.

Le but de l'invention est, on le rappelle, de pouvoir mettre à jour toute donnée sensible de la mémoire MNVP en conservant l'ancienne donnée pour la réutiliser dans le cas où le déroulement de la mise à jour serait intempestivement interrompu avant la fin de son exécution.

L'organisation de la mémoire de sauvegarde MNVS, représentée à la figure 2, est la suivante : elle comporte N zones de sauvegarde; chaque zone permet de sauvegarder une donnée sensible; les zones sont utilisées tour à tour, c'est-à-dire que lorsqu'une zone a été utilisée pour une sauvegarde, c'est une autre zone qui est utilisée pour la sauvegarde suivante; lorsque toutes les zones ont été utilisées, on peut recommencer cycliquement; mais on pourrait aussi prévoir que la carte n'est plus utilisable après consommation des N zones, ou encore que la mise à jour cesse d'être sécurisée.

Pour assurer la sauvegarde d'une donnée sensible avant mise à jour, chaque zone de sauvegarde comporte plusieurs champs. Les champs d'une zone sont de préférence les suivants :
- champ F1 d'indicateur de sauvegarde (un bit peut suffire), indiquant qu'une donnée vient d'être sauvegardée et peut être récupérée si la mise à jour ne s'est pas déroulée correctement jusqu'au bout;
- champ F2 descripteur de zone, donnant des informations sur les données du ou des champs suivants : longueurs de données, codes de vérification, etc.; plus généralement tous les descripteurs nécessaires à l'interprétation des données stockées dans la zone et au contrôle d'intégrité de ces données; dans une réalisation particulière, on prévoira que le champ descripteur comporte en outre l'adresse d'origine des données sauvegardées dans la zone; il faut comprendre cependant que cette adresse pourrait être dans un autre champ que le champ descripteur; l'adresse d'origine peut en particulier se trouver dans le champ décrit ci-après (champ de données), pourvu que le champ descripteur permette de distinguer la donnée sauvegardée et l'adresse d'origine de cette donnée;
- champ F3 de données sauvegardées; en principe un seul champ, dimensionné en fonction de la taille maximale des données susceptibles d'être sauvegardées.

Le champ descripteur F2 est représenté dans un exemple où il comporte quatre sous-champs :
- CHKS : information codée sur 7 bits permettant de vérifier l'intégrité des données contenues dans la zone; c'est par exemple la somme des bits enregistrés d'une part dans les sous-champs suivants du champ descripteur et d'autre part dans le champ de données;
- LNG : octet codant la longueur réelle des données sauvegardées;
- ADh, ADb : octets d'adresse (poids forts et poids faibles) d'origine des données sauvegardées; cette adresse est nécessaire pour restaurer les données sauvegardées dans le cas où la mise à jour ne se serait pas déroulée correctement.

### Procédure de mise à jour de donnée sensible

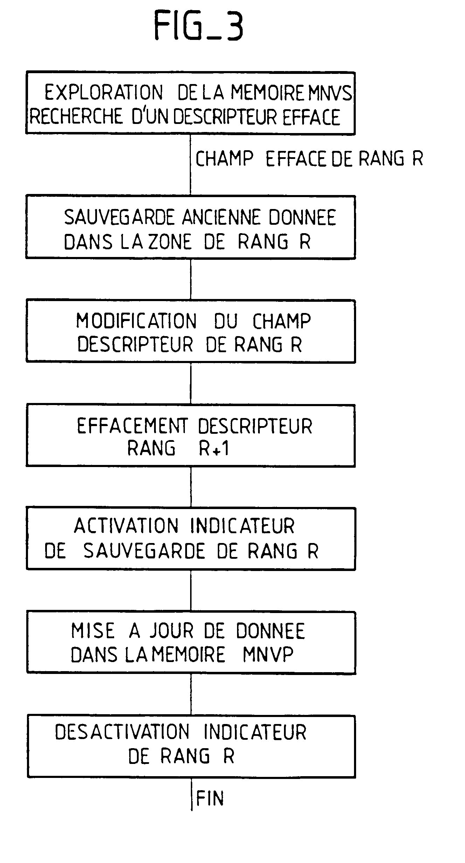

La procédure de mise à jour est rappelée dans l'organigramme de la figure 3, dans le cas où la sauvegarde des données est purement individuelle, c'est-à-dire lorsqu'il n'est pas nécessaire de s'assurer de la cohérence de plusieurs données à la fois.

La procédure comporte, dans le cas où la donnée à sauvegarder est sensible, les étapes suivantes :
- balayage systématique, toujours dans le même ordre, de la mémoire MNVS, pour rechercher une zone dont le champ descripteur a une valeur caractéristique prédéfinie; de préférence cette valeur caractéristique est 0 (tous les bits à zéro), correspondant à un effacement total du champ descripteur; ce sont en principe les programmes de systèmes, en mémoire ROM, qui déterminent l'ordre dans lequel la mémoire MNVS est balayée; soit R (compris entre 1 et N), le rang de la première zone trouvée avec descripteur effacé;
- écriture dans la zone de rang R de l'ancienne valeur de la donnée à mettre à jour, en vue de la sauvegarder; la donnée est écrite dans le champ de données; le champ descripteur est modifié en conséquence; l'adresse d'origine de la donnée est sauvegardée dans le champ descripteur; les autres données de vérification d'intégrité ou d'interprétation sont écrites dans le champ descripteur; l'écriture dans la zone de sauvegarde est de préférence suivie immédiatement d'une vérification de ce qui a été écrit;
- effacement du champ descripteur de la zone suivante, de rang R+1, en vue de la prochaine sauvegarde; ou plus généralement programmation de la valeur caractéristique dans ce champ si la valeur caractéristique n'est pas zéro; le champ descripteur au moins est effacé, mais on peut aussi prévoir d'effacer le champ de données de cette zone de rang R+1;
- activation de l'indicateur de sauvegarde (champ F1 de la zone de rang R); dans ce qui suit on considérera que l'indicateur comporte un bit seulement, que l'état initial est l'état logique 0 et que l'activation consiste dans la mise à l'état 1; l'activation de l'indicateur d'une zone représente la présence dans cette zone de données sauvegardées réutilisables en cas de problème;
- mise à jour effective de la donnée sensible, c'est-à-dire modification de cette donnée dans la mémoire principale MNVP; la modification inclut en principe une lecture immédiate, pour vérification, de la donneé modifiée;
- désactivation de l'indicateur d'activation (retour à l'état 0) si le déroulement de l'opération a été normal d'un bout à l'autre.

Dans le cas où le déroulement a été normal, la carte peut être retirée du lecteur et réutilisée normalement. Elle contient les données mises à jour.

Les paragraphes suivants traitent des cas d'interruption anormale de la procédure et de la restauration de l'ancienne donnée. L'interruption est en pratique une coupure d'alimentation, notamment par retrait intempestif de la carte.

### Restauration en cas d'interruption anormale

Si l'interruption anormale a eu lieu avant que l'indicateur d'activation ait été mis à 1, aucune opération particulière ne doit être effectuée à la remise sous tension. En effet, les données n'ont pas commencé à être mises à jour. Certes il est possible qu'on ait commencé à écrire dans une zone de sauvegarde, mais on n'a pas altéré les données de la mémoire principale MNVP. Tout se passe comme si la carte n'avait pas été utilisée. Elle contient les données qu'elle avait déjà auparavant. Ces données ne sont pas perdues.

Si au contraire l'interruption anormale a lieu pendant que l'indicateur d'activation est à 1, cela veut dire que la mise à jour dans la mémoire principale a commencé. On ne sait pas si la mémoire principale contient alors l'ancienne donnée, ou la nouvelle donnée, ou n'importe quelle information inutilisable, par exemple une zone vide résultant de l'effacement total de la donnée avant réécriture.

C'est pourquoi le programme de système (en mémoire ROM) de la carte vérifie systématiquement l'état des champs d'activation de la mémoire MNVS à chaque remise sous tension de la carte. Si un indicateur est trouvé à 1 pour une zone, le contenu du champ de données de cette zone est réécrit dans la mémoire principale, à l'adresse indiquée dans le champ descripteur correspondant. Puis l'indicateur d'activation est remis à zéro. La mémoire principale se retrouve dans l'état qu'elle avait avant la tentative échouée de mise à jour.

Si enfin l'interruption intempestive se produit après que l'indicateur d'activation ait été remis à zéro, cette interruption n'a pas d'effet : la mise à jour a été effectuée complètement; il n'est pas nécessaire de prévoir une restauration de données anciennes.

### Invalidation de certaines zones de sauvegarde

On prévoit de préférence que certaines zones de la mémoire de sauvegarde MNVS peuvent être invalidées si elles sont reconnues défectueuses.

Cela peut être le cas par exemple si elles sont cycliquement utilisées et sont donc soumises à un certain vieillissement. Ces zones reconnues défectueuses ne doivent plus être utilisées pour la sauvegarde de données sensibles.

Pour cela, lorsqu'un problème d'écriture ou d'effacement est détecté sur une zone de sauvegarde, la zone est mise hors service par l'intermédiaire d'un registre non volatil, appelé registre de validité des zones de sauvegarde (registre RV sur la figure 1). L'existence d'un problème est détecté en principe par comparaison entre les données lues à l'issue d'une programmation et les données qui auraient dû être inscrites. De manière générale, toute écriture dans les mémoires non volatiles est en principe suivie d'une lecture de vérification.

Le registre de validité contient un bit pour chaque zone de sauvegarde. Il peut d'ailleurs être constitué par un champ supplémentaire à l'intérieur même de la mémoire MNVS. Par exemple, un bit à 1 indique que la zone correspondante est invalide et ne doit pas être utilisée.

Dans ce cas, lors des procédures décrites précédemment, on comprendra que le passage d'une zone à une zone suivante comporte d'abord la vérification de la validité de cette zone. Dans le cas où la zone suivant la zone de rang R est invalide, la zone de rang R+1 ne sera pas cette zone invalide mais la première zone valide suivant la zone de rang R. Ainsi, par exemple, lorsqu'on explique que le champ descripteur de la "zone suivante" doit être effacé, c'est la zone suivante valide qui est concernée.

Le registre de validité n'est pas sujet à un vieillissement car il est très rarement programmé et les bits programmés ne sont plus effacés.

### Cas où toutes les zones valides ont été utilisées

Lorsque toutes les zones (zones valides dans le cas où un registre de validité est présent) ont été utilisées, on peut prévoir que la carte ne peut plus fonctionner. Ou encore on peut prévoir que les mises à jour s'effectuent désormais sans sauvegarde. Mais on peut prévoir aussi que la recherche et l'utilisation des zones est cyclique, c'est-à-dire que lorsqu'on doit sauvegarder une information dans la dernière zone de la mémoire MNVS, le programme d'effacement de la zone suivante réalise l'effacement de la première zone (valide) de la mémoire. On réutilise donc une deuxième fois la mémoire MNVS. On peut effectuer un nombre de cylces limité ou non limité. Si on doit limiter le nombre de cycles d'utilisation on comprend qu'il faut prévoir un compteur non volatil pour enregistrer le nombre de cycles effectués.

### Sauvegarde et restauration de plusieurs données en contexte sensible

On s'intéresse maintenant au cas où non seulement les données individuelles sont sensibles, mais aussi où plusieurs données forment un tout dont la cohérence doit être conservée, c'est-à-dire qu'on ne peut pas mettre à jour une donnée si les autres données du groupe cohérent ne sont pas mises à jour.

Les données ne peuvent cependant être mises à jour qu'une par une, par exemple en raison de leur longueur ou en raison du fait qu'elles sont situées à des adresses différentes.

Dans ce cas, on procède de la manière suivante : d'une part les indicateurs d'activation des données individuelles ne sont pas remis à zéro immédiatement après mise à jour de chaque donnée, mais on attend que toutes les données aient été mises à jour; d'autre part un indicateur supplémentaire, spécifique de l'existence d'un groupe cohérent, est activé pour indiquer que la totalité des données du groupe a été mise à jour. Cet indicateur est remis à zéro en dernier, après remise à zéro de tous les indicateurs de données individuelles.

L'indicateur supplémentaire est de préférence constitué par le champ d'indicateur de la zone effacée suivant immédiatement la zone contenant la sauvegarde de la dernière donnée individuelle du groupe cohérent.

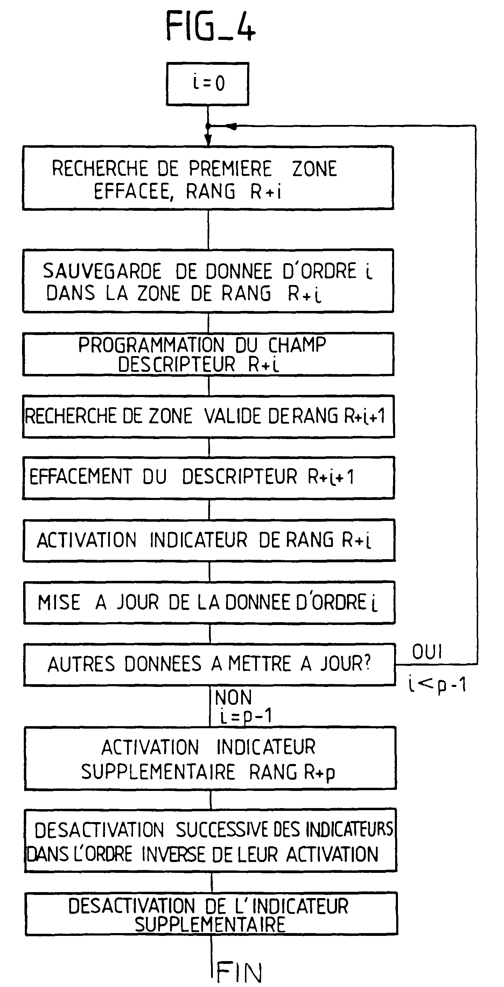

Plus précisément, dans ce cas la procédure de mise à jour du groupe cohérent comporte les étapes suivantes, rappelées dans l'organigramme de la figure 4 :
a. recherche de la première zone dont le champ descripteur est effacé (ou bien sûr une autre valeur caractéristique de champ descripteur); la zone trouvée a un rang R+i, i étant un indice représentant le numéro d'ordre de mise à jour de chaque donnée individuelle dans le groupe cohérent et étant égal à zéro au départ de la procédure; le cas où toute la mémoire a déjà été utilisée a été traité plus haut et peut se résoudre de la même manière : invalidation de la carte, mise à jour sans sauvegarde, ou fonctionnement cyclique de la mémoire MNVS;
b. sauvegarde d'une donnée individuelle dans cette zone de rang R+i, avec programmation correspondante du champ descripteur (octet de vérification de somme, octet de longueur, octets d'adresse d'origine de la donnée);
c. recherche de la zone valide, de rang R+i+1, suivant la zone de sauvegarde; et effacement du descripteur de cette zone suivante;
d. activation de l'indicateur de sauvegarde de la zone de sauvegarde (rang R+i);
e. modification, dans la mémoire principale MNVP, de la donnée sensible dont l'ancienne valeur vient d'être ainsi sauvegardée;
f.
   - incrémentation de i et retour à l'étape (a) si une autre donnée individuelle faisant partie du même groupe cohérent doit être mise à jour;
   - ou au contraire, si la dernière donnée individuelle du même groupe cohérent a été mise à jour, on passe à l'étape suivante (g);
g. activation de l'indicateur de sauvegarde de la zone (effacée) de rang R+p. Le rang R+p-1 étant le rang de la zone de sauvegarde de la dernière information individuelle mise à jour, p étant le nombre de données individuelles faisant partie du groupe cohérent; cet indicateur d'activation supplémentaire, associé à une zone effacée et non à une zone utilisée en sauvegarde, constitue l'indicateur supplémentaire mentionné plus haut, servant à garantir la cohérence de remise à jour du groupe comme on le verra plus loin;
h. désactivation (remise à zéro) successive des indicateurs de sauvegarde des différentes zones de sauvegarde, dans l'ordre inverse de leur activation, c'est-à-dire en commençant par le rang R+p-1 et en remontant jusqu'à R;
i. désactivation de l'indicateur supplémentaire associé à la zone effacée de rang R+p.

### Interruption de mise à jour en cours de route

Si une interruption d'alimentation se produit dans les étapes (a) à (f), certaines données ont été mises à jour, mais pas nécessairement toutes. Les zones de sauvegarde dont l'indicateur est à 1 contiennent une ancienne donnée sauvegardée; celles dont l'indicateur est encore à 0 contiennent une information incertaine mais dans ce cas l'ancienne donnée est encore présente dans la mémoire principale. Pour la cohérence du groupe il est nécessaire de ne pas toucher à la mémoire principale pour les données de zones dont l'indicateur est à zéro, et de restaurer dans la mémoire principale les données des zones dont l'indicateur est à 1. La cohérence du groupe est conservée. Les données gardent toutes leur ancienne valeur.

Si une interruption d'alimentation se produit au cours des étapes (g) et (h), ce que l'on sait par la présence de l'indicateur supplémentaire (rang R+p) à 1, on peut affirmer que toutes les données du groupe ont été mises à jour. Il y a cohérence pour les nouvelles valeurs, et il n'est pas nécessaire de restaurer les anciennes valeurs, même si certains indicateurs des zones R à R+p-1 sont toujours à 1.

Enfin, si l'interruption se produit alors que l'indicateur supplémentaire est revenu à zéro (étape i et après), on peut considérer que la mise à jour cohérente est complètement terminée et il n'y a rien à faire.

### Restauration après coupure d'alimentation

Le programme de système qui se déroule automatiquement à chaque remise sous tension de la carte comporte alors les étapes suivantes :
a1. recherche d'une zone de sauvegarde ayant son indicateur de sauvegarde à 1 (zone de rang compris entre R et R+p-1)
b1. recherche de la zone effacée (rang R+p) qui devrait avoir son indicateur à 1;
c1.
   - si la zone effacée n'existe pas ou si son indicateur d'activation est à zéro (inactivé) : étape d1;
   - sinon : étape d2;
d1. restauration dans la mémoire principale MNVP de chacune des données sauvegardées dans les zones dont l'indicateur est activé, et désactivation à chaque fois de l'indicateur correspondant, en commençant par la zone utilisée en dernier et en terminant par celle qui a été utilisée en premier (on rappelle que la sauvegarde a lieu dans l'ordre des zones); on peut terminer en effaçant le descripteur de la zone suivant la dernière zone utilisée en sauvegarde, pour tenir compte du fait que dans l'étape cl on n'a peut-être pas trouvé de zone effacée; on aura en effet besoin d'une zone effacée pour une opération de mise à jour ultérieure;
d2. effacement successif de tous les indicateurs des zones de sauvegarde utilisées en commençant par celui qui a été activé en dernier, en remontant à celui qui a été activé en premier, et en terminant par l'indicateur supplémentaire de la zone dont le descripteur est effacé.

On peut ainsi constater que la mise à jour cohérente de plusieurs données est possible, sans qu'il soit nécessaire de prévoir des pointeurs non volatils pour repérer les différentes zones de sauvegarde du groupe cohérent.

## Revendications

1. Procédé de mise à jour d'une donnée sensible dans une mémoire non-volatile principale (MNVP), comportant les opérations consistant à :
- sauvegarder dans une mémoire de sauvegarde non volatile (MNVS), divisée en zones de mémoire, l'ancienne valeur de la donnée;
- activer un indicateur de sauvegarde pour indiquer qu'une donnée vient d'être sauvegardée et qu'une modification de donnée sensible est en cours;
- modifier la donnée sensible dans la mémoire principale;
- et désactiver l'indicateur si la modification de la donnée s'est déroulée correctement,
ce procédé étant caractérisé en ce que :
- une zone de mémoire respective différente de la précédente est utilisée à chaque nouvelle mise à jour pour sauvegarder l'ancienne donnée dans la mémoire de sauvegarde;
- au moins un champ, appelé champ descripteur (F2), des zones de la mémoire de sauvegarde est utilisé pour repérer la zone de mémoire de sauvegarde qui doit être utilisée au cours d'une opération de mise à jour.

2. Procédé de mise à jour d'une donnée selon la revendication 1, caractérisé en ce que
- l'opération de mise à jour commence par la recherche, dans la mémoire de sauvegarde, de la première zone de mémoire comportant un champ descripteur ayant une valeur caractéristique déterminée;
- l'opération de sauvegarde de l'ancienne donnée comporte la modification du champ descripteur de la zone de sauvegarde de l'ancienne donnée et comporte également l'inscription de ladite valeur caractéristique dans le champ descripteur de la première zone de mémoire suivant immédiatement cette zone.

3. Procédé de mise à jour selon la revendication 2, caractérisé en ce que la valeur caractéristique du champ descripteur est une valeur nulle correspondant à un effacement global de ce champ.

4. Procédé de mise à jour selon l'une des revendications 1 et 2, caractérisé en ce que la zone de sauvegarde comporte un champ descripteur (F2) et un champ de donnée (F3), le champ descripteur contenant des indications d'interprétation et de contrôle d'intégrité des données inscrites dans le champ de données.

5. Procédé de mise à jour selon la revendication 3, caractérisé en ce que le champ descripteur d'une zone de sauvegarde comporte l'adresse d'origine de l'ancienne donnée sauvegardée dans la zone.

6. Procédé de mise à jour selon l'une des revendications 3 et 4, caractérisé en ce que l'indicateur de sauvegarde pour une opération de mise à jour fait partie de la zone de sauvegarde utilisée lors de cette opération de mise à jour et comporte un bit pour indiquer si cette zone comporte une donnée sauvegardée.

7. Procédé de mise à jour selon l'une des revendications précédentes, caractérisé en ce que d'une part il est prévu un registre non volatile de validité (RV) associé à la mémoire de sauvegarde, ce registre de validité contenant une information de validité de chaque zone de la mémoire de sauvegarde, et caractérisé d'autre part en ce que ladite zone à utiliser pour la sauvegarde de la prochaine donnée est la première zone valide suivant la zone de sauvegarde de l'ancienne donnée.

8. Procédé de mise à jour selon l'une des revendications précédentes, caractérisé en ce qu'à chaque mise sous tension de la mémoire après une interruption, on recherche la présence d'un indicateur activé dans la mémoire de sauvegarde, et on réécrit dans la mémoire principale l'ancienne donnée sauvegardée dans la zone de mémoire de sauvegarde correspondant à l'indicateur activé.

9. Procédé de mise à jour selon l'une des revendications précédentes, dans lequel on cherche à mettre à jour un ensemble cohérent de plusieurs données sensibles qui ne doivent pas être mises à jour séparément, caractérisé en ce qu'on effectue les étapes suivantes :
a. recherche de la première zone de mémoire de sauvegarde dont le champ descripteur a ladite valeur caractéristique,
b. sauvegarde d'une donnée sensible dans cette zone;
c. programmation à ladite valeur caractéristique du champ descripteur de la zone suivant la zone de sauvegarde;
d. activation de l'indicateur de la zone de sauvegarde
e. modification de la donnée sensible
f. retour à l'étape (a) si d'autres données sensibles sont encore à mettre à jour dans l'ensemble cohérent; passage à l'étape (g) si la dernière donnée de l'ensemble vient d'être modifiée;
g. activation d'un indicateur supplémentaire qui est l'indicateur de la zone dont le champ descripteur vient d'être programmé à la valeur caractéristique, c'est-à-dire de la zone qui suit la dernière zone de sauvegarde utilisée;
h. désactivation successive des indicateurs d'activation des différentes zones de sauvegarde utilisées, en commençant par la dernière et en remontant jusqu'à la première des zones utilisées;
i. désactivation de l'indicateur supplémentaire.

10. Procédé de mise à jour selon la revendication 8, caractérisé en ce qu'à chaque remise sous tension de la carte on effectue les opérations suivantes :
a1. recherche d'une zone de sauvegarde ayant son indicateur activé;
b1. recherche d'une zone dont le champ descripteur est à ladite valeur caractéristique;
c1. recherche de l'état de l'indicateur, dit indicateur supplémentaire, de cette dernière zone.
d1. si l'indicateur supplémentaire n'est pas activé, restauration dans la mémoire principale de chacune des données sauvegardées dans les zones de sauvegarde dont l'indicateur est activé; et désactivation à chaque fois de l'indicateur correspondant.
d2. si l'indicateur supplémentaire est activé, désactivation de tous les indicateurs activés en partant de la zone de sauvegarde utilisée en dernier et jusqu'à celle utilisée en premier, puis désactivation de l'indicateur supplémentaire.

11. Procédé selon la revendication 10, caractérisé en ce que si à l'étape bl aucune zone n'est trouvée, l'étape dl est effectuée et une étape supplémentaire de programmation de zone à la valeur caractéristique est effectuée en vue d'une opération de mise à jour ultérieure.

12. Procédé de mise à jour selon l'une des revendications précédentes, caractérisé en ce que lorsque toute les zones de la mémoire de sauvegarde ont été utilisées pour sauvegarder des données sensibles, l'opération de sauvegarde dans la dernière zone disponible de la mémoire de sauvegarde comporte l'effacement du champ descripteur de la première zone de la mémoire de sauvegarde, en vue d'une réutilisation de cette mémoire.

13. Carte à puce comportant un microprocesseur et une mémoire non volatile principale, caractérisée en ce qu'elle comporte un programme de système en mémoire définissant le déroulement des opérations de mise à jour de données sensibles conformément au procédé selon l'une des revendications précédentes, et un programme de restauration de données à la remise sous tension, ce programme comportant la vérification systématique de l'état des indicateurs de sauvegarde, la réinscription de données sauvegardées en fonction de l'état des indicateurs, et la désactivation des indicateurs activés.

## Patentansprüche

1. Verfahren zur Aktualisierung eines sensiblen Datums in einem nicht-flüchtigen Hauptspeicher (MNVP), umfassend die folgenden Schritte:
- Sicherung des alten Werts des Datums in einem nicht-flüchtigen Sicherungsspeicher (MNVS), der in Speicherzonen aufgeteilt ist;
- Aktivierung eines Sicherungsindikators, um anzuzeigen, dass ein Datum gerade gesichert wurde und dass eine Modifikation eines sensiblen Datum abläuft;
- Modifikation des sensiblen Datums in dem Hauptspeicher;
- und Deaktivierung des Indikators, wenn die Modifikation des Datums korrekt abgelaufen ist,
wobei dieses Verfahren dadurch gekennzeichnet ist, dass:
- eine Speicherzone, welche jeweils verschieden ist von der vorangegangenen, bei jeder neuen Aktualisierung verwendet wird, um das alte Datum in dem Sicherungsspeicher zu sichern;
- mindestens ein Feld, welches als Beschreibungsfeld (F2) bezeichnet wird, der Zonen des Sicherungsspeichers verwendet wird, um die Zone des Sicherungsspeichers zu markieren, die verwendet werden muss im Verlauf eines Aktualisierungsvorgangs.

2. Verfahren zur Aktualisierung eines Datums nach Anspruch 1, dadurch gekennzeichnet, dass
- der Vorgang der Aktualisierung damit beginnt, dass im Sicherungsspeicher nach der ersten Speicherzone gesucht wird, die ein Beschreibungsfeld umfasst, welches einen bestimmten charakteristischen Wert hat;
- der Sicherungsvorgang des alten Datums die Modifikation des Beschreibungsfelds der Sicherungszone des alten Datums umfasst, und ebenfalls das Einschreiben des charakteristischen Werts in das Beschreibungsfeld der ersten Zone des Speichers umfasst, die unmittelbar dieser Zone folgt.

3. Verfahren zur Aktualisierung nach Anspruch 2, dadurch gekennzeichnet, dass der charakteristische Wert des Beschreibungsfelds ein Nullwert ist, der einer globalen Löschung dieses Felds entspricht.

4. Verfahren zur Aktualisierung nach Anspruch 1 oder 2, dadurch gekennzeichnet, dass die Sicherungszone ein Beschreibungsfeld (F2) und ein Datenfeld (F3) umfasst, wobei das Beschreibungsfeld die Angaben zur Interpretation und zur Kontrolle der Vollständigkeit der in dem Datenfeld geschriebenen Daten enthält.

5. Verfahren zur Aktualisierung nach Anspruch 3, dadurch gekennzeichnet, dass das Beschreibungsfeld einer Sicherungszone die Ursprungsadresse des in der Zone gesicherten alten Datums umfasst.

6. Verfahren zur Aktualisierung nach einem der Ansprüche 3 oder 4, dadurch gekennzeichnet, dass der Sicherungsindikator für einen Aktualisierungsvorgang Teil der Sicherungszone ist, die verwendet wird bei dem Aktualisierungsvorgang, und ein Bit umfasst, um anzugeben, ob diese Zone ein gesichertes Datum umfasst.

7. Verfahren zur Aktualisierung nach einem der vorangegangenen Ansprüche, dadurch gekennzeichnet, dass einerseits ein nicht-flüchtiges Gültigkeitsregister (RV) vorgesehen ist, das mit dem Sicherungsspeicher in Beziehung steht, wobei dieses Gültigkeitsregister eine Gültigkeitsinformation jeder Zone des Sicherungsspeichers enthält, und andererseits dadurch gekennzeichnet, dass die Zone, welche für die Sicherung des nächsten Datums zu verwenden ist, die erste gültige Zone ist, welche der Sicherungszone des alten Datums folgt.

8. Verfahren zur Aktualisierung nach einem der vorangegangenen Ansprüche, dadurch gekennzeichnet, dass bei jedem Anlegen von Spannung an den Speicher nach einer Unterbrechung, nach dem Vorliegen eines aktivierten Indikators in dem Sicherungsspeicher gesucht wird, und das alte gesicherte Datum in der Zone des Sicherungsspeichers, das dem aktivierten Indikator entspricht, in den Hauptspeicher zurückgeschrieben wird.

9. Verfahren zur Aktualisierung nach einem der vorangegangenen Ansprüche, bei welchem versucht wird ein zusammenhängendes Ensemble von mehreren sensiblen Daten zu aktualisieren, die nicht getrennt aktualisiert werden dürfen, dadurch gekennzeichnet, dass die folgenden Schritte ausgeführt werden:
a. Suche nach der ersten Zone des Sicherungsspeichers, deren Beschreibungsfeld den charakteristischen Wert hat;
b. Sicherung eines sensiblen Datums in dieser Zone;
c. Programmierung des Beschreibungsfelds der Zone, welche der Sicherungszone folgt, auf den charakteristischen Wert;
d. Aktivierung des Indikators der Sicherungszone,
e. Modifikation des sensiblen Datums,
f. Rückkehr zum Schritt (a) wenn weitere sensible Daten im zusammenhängenden Ensemble noch zu aktualisieren sind; Übergang zum Schritt (g), wenn das letzte Datum des Ensembles gerade modifiziert wurde;
g. Aktivierung eines zusätzlichen Indikators, welcher der Indikator der Zone ist, deren Beschreibungsfeld gerade auf den charakteristischen Wert programmiert wurde, d.h. der Zone, welche der letzten verwendeten Sicherungszone folgt;
h. nacheinander Deaktivierung der Aktivierungsindikatoren der verschiedenen verwendeten Sicherungszonen, beginnend mit der letzten und aufsteigend bis zur ersten verwendeten Zone;
i. Deaktivierung des zusätzlichen Indikators.

10. Verfahren zur Aktualisierung nach Anspruch 8, dadurch gekennzeichnet, dass bei jedem erneuten Anlegen von Spannung an die Karte, die folgenden Vorgänge ausgeführt werden:
a1. Suche nach einer Sicherungszone, deren Indikator aktiviert ist;
b1. Suche nach einer Zone, deren Beschreibungsfeld den charakteristischen Wert hat;
c1. Suche nach dem Zustand des Indikators, welcher als zusätzlicher Indikator bezeichnet wird, dieser letzten Zone,
d1. wenn der zusätzliche Indikator nicht aktiviert ist, Wiederherstellen der Daten, die in den Sicherungszonen gesichert sind, deren Indikator aktiviert ist, in dem Hauptspeicher; und jedes mal Deaktivierung des entsprechenden Indikators,
d2. wenn der zusätzliche Indikator aktiviert ist, Deaktivierung aller aktivierten Indikatoren, ausgehend von der Sicherungszone, die zuletzt verwendet wurde, und bis zu jener, welche als erste verwendet wurde, danach Deaktivierung des zusätzlichen Indikators.

11. Verfahren zur Aktualisierung nach Anspruch 10, dadurch gekennzeichnet, dass wenn beim Schritt bl überhaupt keine Zone gefunden wird, der Schritt dl ausgeführt wird, und ein zusätzlicher Schritt zur Programmierung der Zone auf den charakteristischen Wert durchgeführt wird, im Hinblick auf einen späteren Aktualisierungsvorgang.

12. Verfahren zur Aktualisierung nach einem der vorangegangenen Ansprüche, dadurch gekennzeichnet, dass wenn alle Zonen des Sicherungsspeichers verwendet worden sind, um sensible Daten zu sichern, der Sicherungsvorgang in der letzten verfügbaren Zone des Sicherungsspeichers das Löschen des Beschreibungsfelds der ersten Zone des Sicherungsspeichers umfasst, im Hinblick auf eine Wiederverwendung dieses Speichers.

13. Chipkarte, umfassend einen Mikroprozessor und einen nicht-flüchtigen Hauptspeicher, dadurch gekennzeichnet, dass sie ein Systemprogramm im Speicher enthält, welches den Ablauf der Vorgänge zur Aktualisierung von sensiblen Daten entsprechend einem Verfahren nach einem der vorangegangenen Ansprüche definiert, und ein Programm zur Wiederherstellung von Daten nach dem Wiederanlegen von Spannung, wobei dieses Programm die systematische Verifizierung des Zustands der Sicherungsindikatoren umfasst, das Neueinschreiben von gesicherten Daten abhängig vom Zustand der Indikatoren, und die Deaktivierung der aktivierten Indikatoren.

## Claims

1. Process for updating sensitive data in a principal non-volatile memory (MNVP), comprising the operations consisting of:
- saving the old value of the data in a backup non-volatile memory (MNVS) divided into memory zones,
- activating a saving indicator to indicate that data has just been saved and that modification of sensitive data is in progress,
- modifying the sensitive data in the principal memory,
- and deactivating the indicator if the modification of the data has proceeded correctly,
this process being characterised in that:
- a respective memory zone different from the preceding zone is used for each new update to save the old data in the backup memory,
- at least one field, called a descriptive field (F2), of the zones of the backup memory is used to identify the backup memory zone which is to be used in the course of an updating operation.

2. Process for updating data according to claim 1, characterised in that:
- the updating operation starts by searching in the backup memory for the first memory zone having a descriptive field having a given characteristic value,
- the operation of saving the old data comprises modifying the descriptive field of the backup zone for the old data and also comprises writing said characteristic value in the descriptive field of the first memory zone immediately following this zone.

3. Process for updating according to claim 2, characterised in that the characteristic value of the descriptive field is a zero value corresponding to total deletion of this field.

4. Process for updating according to one of claims 1 and 2, characterised in that the backup zone has a descriptive field (F2) and a data field (F3), the descriptive field containing information for interpreting and for checking the completeness of the data written in the data field.

5. Process for updating according to claim 3, characterised in that the descriptive field of a backup zone comprises the original address of the old data saved in the zone.

6. Process for updating according to one of claims 3 and 4, characterised in that the saving indicator for an updating operation forms part of the backup zone used during this updating operation and contains a bit to indicate if this zone contains saved data.

7. Process for updating according to one of the preceding claims, characterised in that firstly a non-volatile validity register (RV) is provided associated with the backup memory, this validity register containing validity information for each zone of the backup memory, and characterised secondly in that said zone to be used for saving the next data is the first valid zone following the backup zone for the old data.

8. Process for updating according to one of the preceding claims, characterised in that whenever the memory is powered up again after an interruption, the backup memory is searched for the presence of an activated indicator, and the old data saved in the backup memory zone corresponding to the activated indicator is rewritten in the principal memory.

9. Process for updating according to one of the preceding claims, serving to update a coherent set of sensitive data which must not be updated separately, characterised in that the following steps are carried out:
a. searching for the first backup memory zone the descriptive field of which has said characteristic value,
b. saving sensitive data in this zone,
c. programming the descriptive field of the zone following the backup zone with said characteristic value,
d. activating the indicator of the backup zone,
e. modifying the sensitive data,
f. returning to step (a) if other sensitive data is still to be updated in the coherent set, passing to step (g) if the last data of the set has just been modified,
g. activating an additional indicator which is the indicator of the zone the descriptive field of which has just been programmed with the characteristic value, i.e. the zone which follows the last backup zone used,
h. successively deactivating the indicators for activation of the different backup zones used, starting with the last and going back to the first of the zones used,
i. deactivating the additional indicator.

10. Process for updating according to claim 8, characterised in that whenever the card is powered up again, the following operations are carried out:
a1. searching for a backup zone having its indicator activated,
b1. searching for a zone the descriptive field of which is at said characteristic value,
c1. searching for the status of the indicator, called the additional indicator, of this last zone,
d1. if the additional indicator is not activated, restoring to the principal memory each of the data saved in the backup zones the indicator of which is activated, and deactivating the corresponding indicator each time,
d2. if the additional indicator is activated, deactivating all the activated indicators starting with the backup zone used last and going back to that used first, then deactivating the additional indicator.

11. Process according to claim 10, characterised in that if no zone is found in step bl, step dl is carried out and an additional step for programming a zone with the characteristic value is carried out with a view to a later updating operation.

12. Process for updating according to one of the preceding claims, characterised in that when all the zones of the backup memory have been used to save sensitive data, the backup operation in the last available zone of the backup memory comprises deletion of the descriptive field of the first zone of the backup memory with a view to reusing this memory.

13. Chip card comprising a microprocessor and a principal non-volatile memory, characterised in that it contains a stored system programme defining the procedure of the operations for updating sensitive data in conformity with the process according to one of the preceding claims, and a programme for restoring data when powering up again, this programme comprising systematic verification of the status of the saving indicators, rewriting of saved data according to the status of the indicators, and deactivation of the activated indicators.
